# EUROPÄISCHE PATENTSCHRIFT

(11) **EP 0 926 033 B1**
(45) Veröffentlichungstag und Bekanntmachung des Hinweises auf die Patenterteilung: **14.06.2006**
(21) Anmeldenummer: 98119386.5
(22) Anmeldetag: 14.10.1998
(51) Int. Cl.: B60T 15/04, B60T 7/04

(54) **Anordnung mit einer Ventileinrichtung**
Arrangement with a valve device
Agencement avec installation de soupape

(30) Priorität: 17.12.1997 DE 19756000
(43) Veröffentlichungstag der Anmeldung: 30.06.1999
(73) Patentinhaber: WABCO GmbH & CO. OHG, 30453 Hannover (DE)
(72) Erfinder: Feldmann, Joachim, 31535 Neustadt (DE)
(74) Vertreter: Schrödter, Manfred

(56) Entgegenhaltungen:
- EP-A- 0 590 515
- DE-A- 2 020 678
- DE-A- 2 328 735
- DE-A- 2 506 794

## Beschreibung

Die Erfindung betrifft eine Anordnung mit einer Ventileinrichtung nach dem Patentanspruch 1.

Eine derartige Anordnung, in der ein Pedal als Bedienungsorgan dient, ist aus der WABCO Westinghouse-Druckschrift "Motorwagen-Bremsventil 461106 Blatt 1", Ausgabe August 1973, bekannt. In dieser üben beim Betätigen der Ventileinrichtung durch Niederdrücken des Bedienungsorgans der gelieferte Druck über die Wirkfläche eines Abstufungskolbens eine Druckkraft und eine der Rückstellung des Abstufungskolbens dienende Feder eine Federkraft auf das Bedienungsorgan aus. Zeitweise, nämlich solange das Einlaßventil der Ventileinrichtung geöffnet ist, übt auch eine dem sicheren Schließen des Einlaßventils dienende und einen Ventilkörper rückstellende Feder eine Federkraft auf das Bedienungsorgan aus. Die vom Bediener auf das Bedienungsorgan ausgeübte Betätigungskraft muß zwecks Aufrechterhaltung der Betätigung diese Kräfte überwinden bzw. ihnen standhalten. Die genannten Federkräfte sind im Verhältnis zu der Druckkraft gering. Die. Federkraft der den Abstufungskolben rückstellenden Feder ist zudem wegen ihrer betriebmäßigen geringen Einfederung nahezu konstant. Deshalb kann gesagt werden, daß die jeweilige Betätigungskraft außer von dem Wert des gerade gelieferten Drucks von den Hebelverhältnissen zwischen Bedienungsorgan und Ventileinrichtung abhängt. Der Verlauf der Betätigungskraft als Funktion des gelieferten Drucks soll hier "Betätigungskraftbedarf" genannt werden.

Nun gibt es Einsatzfälle, die eine Änderung dieser Hebelverhältnisse, beispielsweise durch Änderung der Länge des Bedienungsorgans, dabei jedoch die Aufrechterhaltung des Betätigungskraftbedarfs erfordern. Andererseits gibt es Einsatzfälle, die eine Änderung des Betätigungskraftbedarfs bei unveränderten Hebelverhältnissen erfordern. Solche Einsatzfälle treten insbesondere auf, wenn das Bedienungsorgan von der Ventileinrichtung getrennt angeordnet ist, wie es beispielsweise in der WABCO Westinghouse-Druckschrift "Motorwagen-Bremsventil 461295", Ausgabe August 1973, vorgesehen ist. Eine Anpassung an solche Fälle ist nicht ohne Änderung des Durchmessers des Abstufungskolbens und damit zusammenhängender weiterer Änderungen der Ventileinrichtung möglich. Diese Änderungen, die auf eine Umkonstruktion der Ventileinrichtung hinauslaufen, sind mit einem erheblichen Entwicklungsaufwand verbunden. Außerdem verursachen sie wegen der dadurch bedingten größeren Variantenzahl u. a. höhere Fertigungs-, Material- und Lagerhaltungskosten.

Der Erfindung liegt die Aufgabe zugrunde, eine Anordnung der eingangs genannten Art mit einfachen Mittel so auszubilden, daß sie ohne oder mit geringen Änderungen der Ventileinrichtung eine Anpassung an verschiedene Einsatzfälle ermöglicht.

Diese Aufgabe wird durch die in dem Patentanspruch 1 angegebene Erfindung gelöst. Vorteilhafte Ausgestaltungen und Fortbildungen sind in den Unteransprüchen angegeben.

Anordnungen der eingangs genannten Art sind auf allen technischen Gebieten gebräuchlich, in denen druckbetätigte Steueranlagen, insbesondere pneumatische Steueranlagen, zum Einsatz kommen. Ein wichtiges Anwendungsgebiet der Erfindung stellen pneumatische Fahrzeug-Bremsanlagen dar.

Die Erfindung wird nunmehr anhand eines zeichnerisch dargestellten Ausführungsbeispiels erläutert. Unter durchgehender Verwendung gleicher Bezugszeichen für funktionsgleiche Bauteile zeigen
- Fig. 1: schematisch eine Anordnung mit einer Ventileinrichtung,
- Fig. 2: schematisch eine andere Anordnung mit einer Ventileinrichtung.

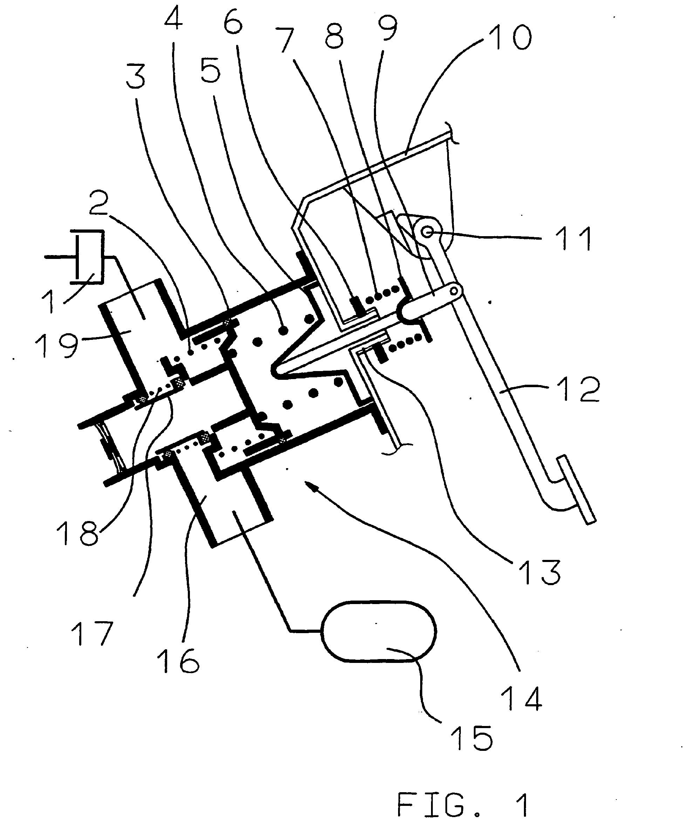

Die in Fig. 1 dargestellte Anordnung besteht aus einer Ventileinrichtung (14), einem Bedienungsorgan (12), einem Übertragungsglied (9) und einer Feder (7).

Das als Pedal dargestellte, aber auch in anderer Gestalt mögliche, Bedienungsorgan (12) ist mittels einer Lagerwelle (11) drehbar. Anstelle der Lagerwelle kann auch eine Lagerachse vorgesehen sein. Das Bedienungsorgan (12) wird im unbetätigten Zustand durch die Feder (7) in seiner Ruhestellung an einem nicht näher bezeichneten Anschlag eines die Ventileinrichtung (14) und das Bedienungsorgan (12) lagernden Lagerteils (10) gehalten. Zu diesem Zweck ist die Feder (7) zwischen dem Bedienungsorgan (12) und dem Lagerteil (10) eingespannt. Die Einspannung am Bedienungsorgan (12) folgt im Ausführungsbeispiel über einen Federteller (8), der von der Feder (7) gegen eine Schulter des Übertragungsgliedes (9) gedrückt wird. Diese Einspannung kann auch auf jede andere geeignete Weise erfolgen. In der Fahrzeugtechnik dient üblicherweise ein Fahrerhaus-Boden oder -Stirnwandteil als Lagerteil (10).

Der Bediener betätigt die Anordnung durch eine Drehung des Bedienungsorgans (12) gegen die Kraft der Feder (7). Einen dieser Drehung entsprechenden Hub etwa in seiner Langsrichtung überträgt das Übertragungsglied (9) auf die Ventileinrichtung (14). Infolgedessen liefert die Ventileinrichtung (14) aus einem Druckvorrat (15), mit dem sie über einen Vorratsanschluß (16) verbunden ist, Druck an einen oder mehrere Verbraucher (1), mit dem/denen sie über einen Arbeitsanschluß (19) verbunden ist. Der Wert des gelieferten Drucks hängt von dem Hub des Übertragungsgliedes (9), also dem Drehwinkel bzw. Betätigungsweg des Bedienungsorgans (12), ab. Dieser Druck ist bis zum Vorratsdruck um so größer, je größer der Drehwinkel bzw. Betätigungsweg des Bedienungsorgans (12) ist.

Die Ventileinrichtung (14) kann auf einfache Weise beispielsweise aus der in der WABCO Westinghouse-Druckschrift "Motorwagen-Bremsventil 461295" beschriebenen hergestellt werden.

Der gelieferte Druck erzeugt innerhalb der Ventileinrichtung (14) auf der Wirkfläche eines Abstufungskolbens (3) eine Druckkraft, die über eine Regelfeder (4) sowie einen Federteller (5) und über das Übertragungsglied (9) auf das Bedienungsorgan (12) rückwirkt. Unterstützt wird diese Kraft außer durch die Federkraft der Feder (7) durch die Federkräfte einer den Abstufungskolben (3) rückstellenden Feder (2) und einer einen Ventilkörper (17) der Ventileinrichtung (14) rückstellenden Feder (18).

Will der Bediener einen von ihm vorgegebenen Drehwinkel bzw. Betätigungsweg des Bedienungsorgans (12) und damit den dadurch bestimmten Wert des gelieferten Drucks aufrechterhalten, so muß die von ihm auf das Bedienungsorgan (12) ausgeübte Betätigungskraft der Druckkraft und den genannten Federkräften standhalten.

Nun gelten auch hier für die den Abstufungskolben (3) und den Ventilkörper (17) rückstellenden Federn (2, 18) die in der Beschreibungseinleitung zu der bekannten Anordnung gemachten Ausführungen. Hinsichtlich des Ausführungsbeispiels kann deshalb gesagt werden, daß der Betätigungskraftbedarf außer von den Hebelverhältnissen der Anordnung von der Druckkraft und der Federkraft der Feder (7) abhängt. Dies bedeutet, da die Kraftabgabe der Feder (7) auf verhältnismäßig einfache Weise änderbar ist, daß der Betätigungskraftbedarf der Anordnung durch Änderung der Federkraft leicht geändert werden kann.

Diese Möglichkeit ist insbesondere von Bedeutung, wenn unterschiedliche Einsatzfälle eine Anpassung des Betätigungskraftbedarfs erfordern. Solche Einsatzfälle können bei geänderten Hebelverhältnissen, insbesondere bei geänderter Länge des Bedienungsorgans, einen unveränderten Betätigungskraftbedarf oder bei unveränderten Hebelverhältnissen eine Änderung des Betätigungskraftbedarfs verlangen.

Es gibt auch Anordnungen, in denen wegen des kleinen Durchmessers des Abstufungskolbens (3) der Ventileinrichtung (14) nur eine kleine Druckkraft auftritt. Solche Anordnungen finden Anwendung insbesondere in Einsatzfällen, die hinsichtlich der Abstufbarkeit des von der Ventileinrichtung (14) gelieferten Drucks Kompromisse erlauben, wie beispielsweise im pneumatischen Notbremskreis einer elektrisch gesteuerten Fahrzeug-Bremsanlage. In solchen Fällen erlaubt die Feder (7) bei unterschiedlichen Hebelverhältnisse die Sicherstellung eines Betätigungskraftbedarfs in einer Größenordnung, wie sie der Bediener gewöhnt ist.

Die Änderung der Federkraft kann durch Austausch der vorhandenen Feder (7) gegen eine mit der gewünschten Kraftabgabe vorgenommen werden. Eine andere Möglichkeit ist, die Feder (7) einstellbar zu installieren. Eine solche Variante ist in der Fig. angedeutet. Das Lagerteil (10) weist um den Durchtritt des Übertragungsgliedes (9) herum einen Gewindestutzen (13) auf, auf dem ein Federteller (6) mit Innengewinde durch Drehen längsverschiebbar ist. Durch die Längsverschiebbarkeit dieses Federtellers (6) ist die Vorspannung der Feder (7) und damit ihre Federkraft einstellbar.

Weitere Möglichkeiten zur Anpassung der Anordnung an verschiedene Einsatzfälle entstehen durch die Wahl bzw. Änderung der Kraft/Weg-Kennlinie der Feder (7). Durch entsprechende konstruktive Auslegung der Feder (7) kann diese eine lineare oder nicht-lineare Kraft/Weg-Kennlinie aufweisen mit entsprechendem Verlauf der Betätigungskraft auf das Bedienungsorgan (12). Häufig wird ein progressiver Verlauf der Betätigungskraft gefordert. Ein solcher ist beispielsweise durch eine progressive Kraft/Weg-Kennlinie der Feder (7) erzielbar oder (wenn die Regelfeder (4) bereits progressiv ist) unterstützbar.

Die als Schraubenfeder dargestellte Feder (7) kann auch völlig anders gestaltet sein, beispielsweise als Elastomerfeder ähnlich den Regelfedern in den bereits erwähnten WABCO Westinghouse-Druckschriften.

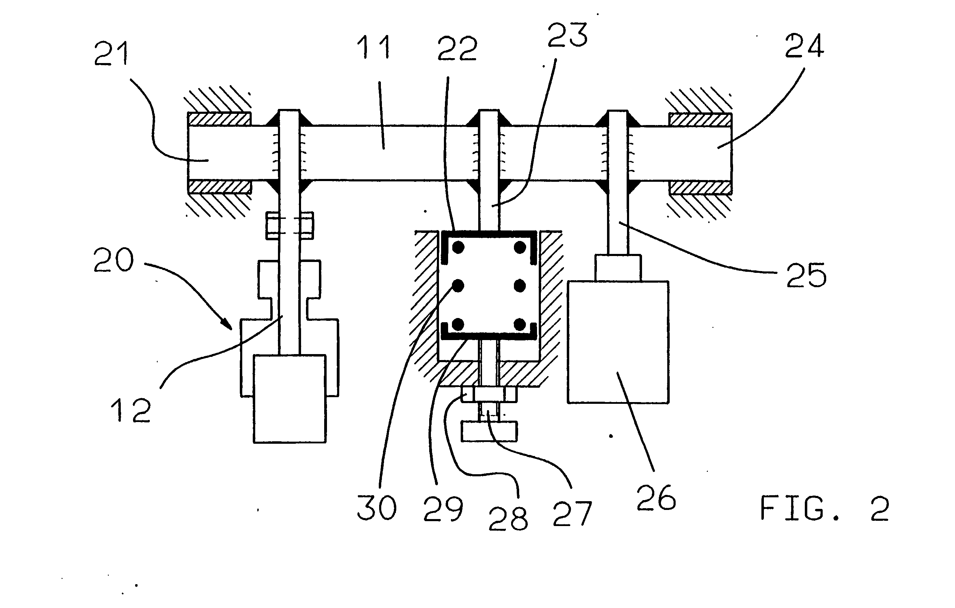

Fig. 2 zeigt aus der Blickrichtung des Bedieners eine andere Anordnung. Die hier mit (30) bezeichnete Feder ist hier neben dem Bedienungsorgan (12) angeordnet. Auf diese Feder (30) wirkt die mit dem Bedienungsorgan (12) fest verbundene Lagerwelle (11) unter Zwischenschaltung eines Tassenstößels (22) über einen Nocken (23) ein. Die Feder (30) ist über einen Federteller (29) und eine Einstellschraube (27) mit Sicherungsmutter (28) einstellbar.

Die Ventileinrichtung (20) ist hier eine solche mit Umlenkhebel, wie sie in der bereits erwähnten WABCO Westinghouse-Druckschrift "Motorwagen-Bremsventil 461295" beschrieben ist.

Das Bedienungsorgan (12) dient in dieser Anordnung zur gleichzeitigen Betätigung einer anderen Einrichtung (26), die in diesem Fall ein elektrischer Bremswertgeber einer elektrisch gesteuerten Fahrzeug-Bremsanlage sein soll. Ein solcher Bremswertgeber ist beispielsweise in der US 4 818 036 beschrieben.

Zur Betätigung der anderen Einrichtung (26) ist an der Lagerwelle (11) ein weiterer, mit dieser fest verbundener, Nocken (25) angeordnet.

Je nach Einsatzfall kann die andere Einrichtung (26) anders sein, und es können auch mehrere andere Einrichtungen vorgesehen sein, für die die Lagerwelle (11) entsprechende Nocken aufweisen muß. Das bedeutet nicht, daß die Lagerwelle (11) für jede andere Einrichtung einen eigenen Nocken aufweisen muß. Vielmehr ist auch vorstellbar, daß die Einrichtungen winklig zueinander angeordnet sind und der Nocken, auf seinem Umfang verteilt, für jede dieser Einrichtungen eine eigene Nokkenkontur aufweist.

Mit (21) und (24) sind noch die Drehlager der Lagerwelle (11) dargestellt.

Im übrigen gelten für die eine Fig. die für die andere Fig. gemachten Ausführungen in direkter oder entsprechender Anwendung, soweit sich aus den vorstehenden Ausführungen nichts Widersprechendes ergibt.

Der Fachmann erkennt auch, daß die Ausführungsbeispiele den Schutzbereich der Erfindung nicht erschöpfend beschreiben, und das dieser vielmehr alle Ausgestaltungen umfaßt, deren Merkmale sich den Patentansprüchen unterordnen.

## Patentansprüche

1. Anordnung mit einer Ventileinrichtung zur Lieferung eines Drucks aus einem Druckvorrat (15), mit
a) einem Bedienungsorgan (12), auf welches der gelieferte Druck eine Druckkraft ausübt,
b) wenigstens einer Feder (7; 30), die so angeordnet ist, daß sie zusätzlich und unabhängig von der Druckkraft auf das Bedienungsorgan (12) eine die Druckkraft unterstützende Federkraft ausübt,
c) wobei die Federkraft so bemessen ist, daß die Anordnung einen vorbestimmten Betätigungskraftbedarf aufweist.

2. Anordnung nach Anspruch 1,
**dadurch gekennzeichnet,**
**daß** die Federkraft einstellbar ist.

3. Anordnung nach einem der vorhergehenden Ansprüche,
**dadurch gekennzeichnet,**
**daß** die Feder (30) so angeordnet ist, daß sie außerhalb der Druckkraft an dem Bedienungsorgan (12) angreift.

4. Anordnung nach einem der vorhergehenden Ansprüche,
**dadurch gekennzeichnet,**
**daß** das Bedienungsorgan (12) zur gleichzeitigen Betätigung wenigstens einer anderen Einrichtung (26) dient.

5. Anordnung nach Anspruch 4, die in einem Fahrzeug als Bremsventil dient,
**dadurch gekennzeichnet,**
**daß** eine andere Einrichtung (26) ein elektrischer Bremswertgeber ist.

6. Anordnung nach einem der vorhergehenden Ansprüche,
**dadurch gekennzeichnet,**
**daß** die Feder (7; 30) eine nichtlineare Kraft/Weg-Kennlinie aufweist.

7. Anordnung nach Anspruch 6,
**dadurch gekennzeichnet,**
**daß** die Kraft/Weg-Kennlinie der Feder (7; 30) progressiv ist.

## Claims

1. Arrangement having a valve device to deliver a pressure from a pressure supply (15), comprising
(a) an operating member (12) upon which a compressive force is exerted by the delivered pressure,
(b) at least one spring (7; 30) so arranged that is exerts upon the operating member (12) a spring force that supports the compressive force in addition to and independently of the compressive force,
(c) the spring force being so calculated that the arrangement has a predetermined required operating force.

2. Arrangement according to claim 1,
**characterized in that**
the spring force is adjustable.

3. Arrangement according to either of the preceding claims,
**characterized in that**
the spring (30) is so arranged that it engages the operating member (12) independently of the compressive force.

4. Arrangement according to any one of the preceding claims,
**characterized in that**
the operating member (12) serves the simultaneous actuation of at least one other device (26).

5. Arrangement according to claim 4 used in a vehicle as a brake valve,
**characterized in that**
the other device (26) is an electrical brake value transmitter.

6. Arrangement according to any one of the preceding claims,
**characterized in that**
the spring (7; 30) has a non-linear force/path characteristic.

7. Arrangement according to claim 6,
**characterized in that**
the force/path characteristic of the spring (7; 30) is progressive.

## Revendications

1. Agencement avec un dispositif de valve pour fournir une pression à partir d'une réserve de pression (15), comportant
a) un organe de manipulation (12) sur lequel la pression fournie exerce une force de pression,
b) au moins un ressort (7 ; 30) qui est agencé de manière à exercer sur l'organe de manipulation (12), en supplément et indépendamment de la force de pression, une force élastique soutenant la force de pression,
c) dans lequel la force élastique est dimensionnée de telle sorte que l'agencement présente un besoin de force d'actionnement prédéterminé.

2. Agencement selon la revendication 1, **caractérisé en ce que** la force élastique est réglable.

3. Agencement selon l'une des revendications précédentes, **caractérisé en ce que** le ressort (30) est agencé de manière à attaquer l'organe de manipulation (12) en dehors de la force de pression.

4. Agencement selon l'une des revendications précédentes, **caractérisé en ce que** l'organe de manipulation (12) sert à l'actionnement simultané d'au moins un autre dispositif (26).

5. Agencement selon la revendication 4, qui sert de valve de frein dans un véhicule, **caractérisé en ce qu'**un autre dispositif (26) est un capteur électrique de valeur de freinage.

6. Agencement selon l'une des revendications précédentes, **caractérisé en ce que** le ressort (7 ; 30) présente une courbe caractéristique force/course non linéaire.

7. Agencement selon la revendication 6, **caractérisé en ce que** la courbe caractéristique force/course du ressort (7 ; 30) est progressive.
